# EUROPÄISCHE PATENTANMELDUNG

(11) **EP 3 588 614 A1**
(43) Veröffentlichungstag der Anmeldung: **01.01.2020**
(21) Anmeldenummer: 18178926.4
(22) Anmeldetag: 21.06.2018
(51) Int. Cl.: H01M 2/20

(54) **POUCHZELLE UND STACK**

(71) Anmelder: Hilti Aktiengesellschaft, 9494 Schaan (LI)
(72) Erfinder: Lepiorz, Matthias, 91413 Neustadt/Aisch (DE); Ender, Moses, 9470 Buchs (CH); Hauser, Klaus, 86830 Schwabmünchen (DE); Martiny, Nora, 82211 Herrsching-Breitbrunn (DE); Ziegler, Bernd, 86830 Schabmünchen (DE); Stanger, Robert, 87600 Kaufbeuren (DE); Sax, Kathrin, 86937 Scheuring (DE)
(74) Vertreter: Hilti Aktiengesellschaft Corporate Intellectual Property

(57) **Zusammenfassung**

Pouchzelle mit einer Plus-Kontaktfahne und einer Minus-Kontaktfahne, über die die Pouchzelle Pochzelle elektrisch kontaktiert und so beladen und entladen werden kann, wobei die Pouchzelle flächig ausgebildet ist und eine flache Zelloberfläche aufweist, die sich parallel zur der Plus-Kontaktfahne und der Minus-Kontaktfahne erstreckt, wobei die Plus-Kontaktfahne ein oberes Plus-Verbindungselement und ein unteres Plus-Verbindungselement aufweist, die auf einander gegenüberliegenden Seiten der Plus-Kontaktfahne angeordnet sind, und die Minus-Kontaktfahne oberes Minus-Verbindungselement und ein unteres Minus-Verbindungselement aufweist, die auf einander gegenüberliegenden Seiten der Minus-Kontaktfahne angeordnet sind.

## Beschreibung

### Pouchzelle und Stack

Die vorliegende Erfindung betrifft eine Pouchzelle mit einer Plus-Kontaktfahne und einer Minus-Kontaktfahne, über die die Pouchzelle elektrisch kontaktiert und so beladen und entladen werden kann. Die Pouchzelle ist flächig ausgebildet und weist eine flache Zelloberfläche auf, die sich parallel zu der Plus-Kontaktfahne und der Minus-Kontaktfahne erstreckt. Vorzugsweise weist die Pouchzelle einen Lithium-Ionen-Akkumulator auf.

Pouchzellen der eingangs genannten Art sind grundsätzlich aus dem Stand der Technik bekannt.

Der vorliegenden Erfindung liegt die Aufgabe zugrunde, eine Pouchzelle bereitzustellen, die ein einfaches und sicheres Kontaktieren begünstigt.

Die Aufgabe wird dadurch gelöst, dass die Plus-Kontaktfahne ein oberes Plus-Verbindungselement und ein unteres Verbindungselement aufweist, die auf einander gegenüberliegenden Seiten der Plus-Kontaktfahne angeordnet sind, und die Minus-Kontaktfahne ein oberes Minus-Verbindungselement und ein unteres Minus-Verbindungselement aufweist, die auf einander gegenüberliegenden Seiten der Minus-Kontaktfahne angeordnet sind.

Die Erfindung schließt die Erkenntnis ein, dass Pouchzellen im Massenproduktionsprozess schwierig zu handhaben sind, da ihre Kontaktfahnen typischerweise nahe beieinanderliegen und die Pouchzellen bei unachtsamer Handhabbarkeit kurzgeschlossen werden können. Weiterhin wurde erkannt, dass Pouchzellen aufgrund ihrer Bauform zur elektrischen Kontaktierung bisher nicht widerstandsgeschweißt werden können. Dies führt beim Massenproduktionsprozess von Batteriepacks bzw. Stacks mit Pouchzellen zu einem hohen technischen und finanziellen Aufwand für automatisierte Anlagen, welche die elektrische Kontaktierung der einzelnen Pouchzellen durchführen.

In Abkehr dazu wird eine Pouchzelle geschaffen, die sich durch die erfindungsgemäßen Verbindungselemente, die sowohl an der Plus-Kontaktfahne als auch an der Minus-Kontaktfahne vorgesehen sind, vergleichsweise einfach kontaktiert werden können.

Auf Basis der erfindungsgemäß bereitgestellten Pouchzelle kann ein Stack mit einer Mehrzahl von Pouchzellen bereitgestellt werden. Ein solcher Stack kann Teil eines Batteriepacks zur Versorgung einer elektrischen Handwerkzeugmaschine sein. Demgemäß führt die Erfindung auch auf die Verwendung eines Stacks mit einer Mehrzahl erfindungsgemäßer Pouchzellen zur Versorgung einer elektrischen Handwerkzeugmaschine.

Diesbezüglich schließt die Erfindung die Erkenntnis ein, dass Batteriepacks für elektrische Handwerkzeugmaschinen typischerweise ausschließlich aus zylindrisch geformten Lithium-Ionen-Zellen gefertigt sind. Mit zunehmender Leistungsanforderung von Handwerkzeugmaschinen steigen jedoch die erforderlichen Entladeströme, wodurch die Batteriepacks infolge höherer Verlustleistungen die maximale Zulässigkeit vor dem Entladen erreichen und thermisch bedingt abgeschaltet werden müssen. Die im Batteriepack verbleibende Restenergie steht Nutzern nicht - oder erst nach einer Abkühlphase - zur Verfügung.

Mit einem Stack aufweisend eine Mehrzahl erfindungsgemäß kontaktierter Pouchzellen, kann ein thermisch bedingtes Abschalten von Batteriepacks für elektrische Handwerkzeugmaschinen reduziert werden. Dies da statt konventioneller zylindrisch geformter Lithium-Ionen-Zellen nunmehr Pouchzellen eingesetzt werden können. Es wurde erkannt, dass Pouchzellen aufgrund ihres inneren elektrischen Aufbaus einen geringeren elektrischen Widerstand besitzen und somit bei vergleichsweise hohen Entladeleistungen weniger Verlustleistung aufweisen, wodurch Batteriepacks mit solchen Pouchzellen entweder länger oder mit höheren Leistungen betrieben werden können.

in einer besonders bevorzugten Ausgestaltung sind die Verbindungselemente als Steckverbindungselemente oder Schraubverbindungselemente ausgebildet. In einer weiteren besonders bevorzugten Ausgestaltung sind die Verbindungselemente als Steckverbindungselemente ausgebildet, sodass im Zuge eines Massenproduktionsprozesses mehrere Pouchzellen durch Stecken elektrisch miteinander verbunden und kontaktiert werden können. Alternativ oder zusätzlich können die Pouchzellen mittels Pressens oder Erhitzens elektrisch irreversibel oder reversibel miteinander verbunden werden.

Es hat sich als vorteilhaft herausgestellt, wenn beide Plus-Verbindungselemente gleichen Typs, vorzugsweise weiblichen Typs sind. Alternativ oder zusätzlich können beide Minus-Verbindungselemente gleichen, vorzugsweise männlichen Typs sein. Alternativ zur Ausgestaltung der Plus-Verbindungselemente und/oder der Minus-Verbindungselemente gleichen Typs, können die beiden Plus-Verbindungselemente zueinander komplementären Typs sein und/oder die beiden Minus-Verbindungselemente zueinander komplementären Typs sein.

Ein Steckverbindungselement weiblichen Typs kann beispielsweise eine Steckbuchse, vorzugsweise eine hülsenförmig ausgebildete Steckbuchse sein. Komplementär dazu ist ein Steckverbindungselement männlichen Typs vorzugsweise als Stecker, insbesondere als zylindrischer Stecker ausgestaltet. In einer weiter bevorzugten Ausgestaltung kann ein männliches Steckverbindungselement - beispielsweise eine mechanische Rastvorrichtung wie in Form eines Widerhakens - aufweisen, um das männliche Steckverbindungselement irreversibel mit einem Steckverbindungselement weiblichen Typs zu verbinden. Eine Paarung zwischen weiblicher Hülse und männlichem Stecker kann formschlüssig sein. Eine Paarung zwischen weiblicher Hülse und männlichem Stecker kann als Presspassung ausgebildet sein.

Es hat sich als vorteilhaft herausgestellt, wenn die Verbindungselemente zumindest abschnittsweise elektrisch leitfähig sind. Die als Steckverbindungselemente ausgebildeten Verbindungselemente können auch vollständig elektrisch leitfähig sein.

In einer weiteren besonders bevorzugten Ausgestaltung erstrecken sich die Verbindungselemente jeweils senkrecht zur flachen Zelloberfläche. Die Verbindungselemente können, senkrecht zu der flachen Zelloberfläche, über die flache Zelloberfläche hinausragen. Besonders bevorzugt ragen sowohl die oberen Verbindungselemente als auch die unteren Verbindungselemente, jeweils bezogen auf senkrechte Richtung (parallel zur Flächennormale) der flachen Zelloberfläche, über die flache Zelloberfläche hinaus.

Es hat sich als vorteilhaft herausgestellt, wenn die Kontaktfahnen in seitlicher Richtung von der Pouchzelle abstehen.

In einer weiteren bevorzugten Ausgestaltung kann ein oder mehrere Verbindungselemente eine innere, vorzugsweise koaxial angeordnete Isolierung oder Passivierung aufweisen. Somit können Kurzschlüsse beim Stacking (Stapeln) der Pouchzellen vermieden werden.

Alternativ oder zusätzlich kann die Pouchzelle außerhalb der Verbindungselemente elektrisch isoliert, vorzugsweise vollständig elektrisch isoliert sein.

Die Erfindung wird ebenfalls gelöst durch einen Stack (Stapel) mit einer Mehrzahl von Pouchzellen der vorgeschriebenen Art, wobei die Pouchzellen über ihre jeweiligen Verbindungselemente elektrisch miteinander kontaktiert sind.

Die Erfindung führt ebenfalls auf ein erfindungsgemäßes Verfahren zum Erzeugen eines Stacks mit einer Mehrzahl von Pouchzellen, wobei zunächst eine Mehrzahl von Pouchzellen bereitgestellt wird, wobei deren jeweilige Plus-Kontaktfahne ein oberes Plus-Verbindungselement und ein unteres Plus-Verbindungselement aufweist und deren jeweilige Minus-Kontaktfahne ein oberes Verbindungselement und ein unteres Minus-Verbindungselement aufweist. In einem anschließenden Schritt wird die Mehrzahl von Pouchzellen über ihre jeweiligen Verbindungselemente elektrisch miteinander kontaktiert. Vorzugsweise weist der Schritt des Kontaktierens ein Stecken, Pressen und/oder Erhitzen auf. Vorzugsweise werden im Zuge des Stackings die Pouchzellen wechselseitig, das heißt jeweils um 180° gedreht, aufeinandergelegt. Im Zuge des erfindungsgemäßen Verfahrens können die Pouchzellen durch Druck, Hitze miteinander verbunden werden. Alternativ oder zusätzlich können die Pouchzellen miteinander verschraubt werden. Dazu wird vorzugsweise eine isolierende Durchführung bereitgestellt, die sich innerhalb der Verbindungselemente erstreckt und so eine vorzugsweise metallische Schraubvorrichtung elektrisch vom übrigen Teil der jeweiligen Verbindungselemente isoliert.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: ein erstes bevorzugtes Ausführungsbeispiel einer erfindungsgemäßen Pouchzelle;
- Fig. 2: zwei Pouchzellen der Fig. 1 im Zuge des elektrischen Kontaktierens;
- Fig. 3: ein Stack aufweisend drei Pouchzellen der Fig. 1;
- Fig. 4: eine Seitenansicht eines alternativen Stacks aufweisend eine Mehrzahl von Pouchzellen;
- Fig. 5: ein zweites bevorzugtes Ausführungsbeispiel einer erfindungsgemäßen Pouchzelle; und
- Fig. 6: ein Stack aufweisend drei Pouchzellen eines dritten bevorzugten Ausführungsbeispiels.

### Ausführunasbeispiele:

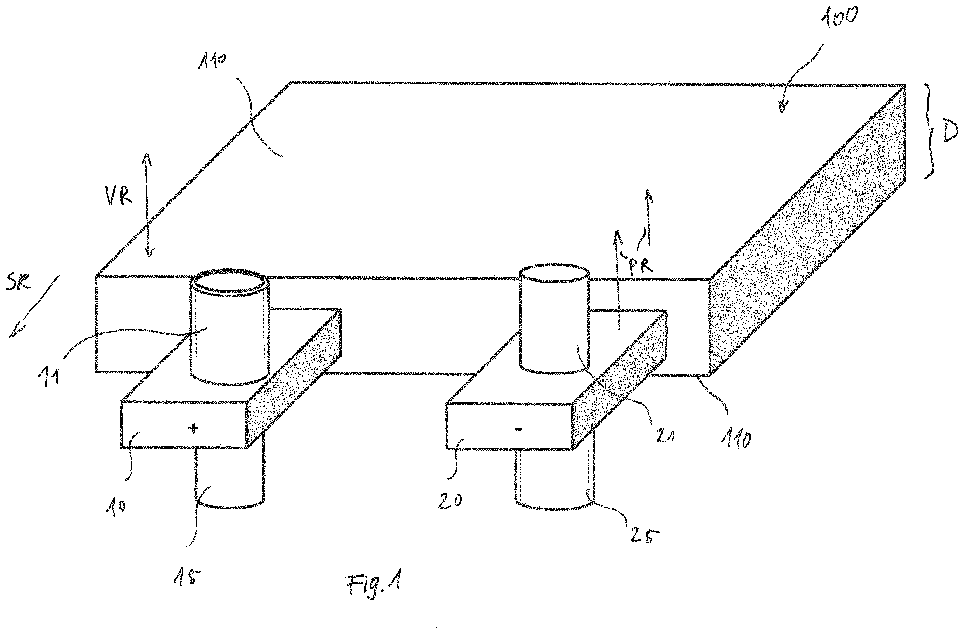

Ein bevorzugtes Ausführungsbeispiel einer erfindungsgemäßen Pouchzelle 100 ist in Fig. 1 dargestellt. Die Pouchzelle 100 weist eine Plus-Kontaktfahne 10 und eine Minus-Kontaktfahne 20 auf. Über die Plus-Plus-Kontaktfahne 10 und die Minus-Kontaktfahne 20 ist die Pouchzelle elektrisch kontaktiert bzw. kontaktierbar und kann so mit Strom beladen bzw. entladen werden. Die Pouchzelle 100 ist flächig ausgebildet und weist eine flache Zelloberfläche 110 auf, die sich in paralleler Richtung PR zu der Plus-Kontaktfahne 10 und der Minus-Kontaktfahne 20 erstreckt. Die Pouchzelle 100 der Fig. 1 ist rechteckig ausgebildet, die Dicke D beträgt weniger als ein Fünftel einer jeweiligen Seitenlänge der Pouchzelle 100. Im vorliegend dargestellten Ausführungsbeispiel ist die Pouchzelle 100 ein Lithium-Ionen-Akkumulator.

Wie der Fig. 1 entnommen werden kann, weist die Plus-Kontaktfahne 10 ein oberes Plus-Verbindungselement 11 und ein unteres Plus-Verbindungselement 15 auf. Das obere Plus-Verbindungselement 11 und das untere Plus-Verbindungselement 15 sind auf einander gegenüberliegenden Seiten der Plus-Kontaktfahne angeordnet. Das obere Plus-Verbindungselement 11 und das untere Plus-Verbindungselement 15 sind als Steckverbindungselemente zueinander komplementären Typs ausgeformt. Konkret ist das obere Plus-Verbindungselement 11 als weibliche Steckhülse (inneres Volumen angedeutet durch die gestrichelte Linie) ausgebildet. Das untere Plus-Verbindungselement 15 ist dazu komplementär als männlicher Stecker ausgebildet.

Ebenfalls gut zu erkennen in Fig. 1 ist, dass die Minus-Kontaktfahne 20 ein oberes Minus-Verbindungselement 21 oder ein unteres Minus-Verbindungselement 25 aufweist. Das obere Minus-Verbindungselement 21 und das untere Minus-Verbindungselement 25 sind auf einander gegenüberliegenden Seiten der Minus-Kontaktfahne angeordnet. Ebenso wie die Verbindungselemente 11, 15 der Plus-Kontaktfahne 10 sind die Verbindungselemente 21, 25 der Minus-Kontaktfahne 20 als Steckverbindungselemente ausgebildet. Dabei sind die Minus-Verbindungselemente 21, 25 zueinander komplementären Typs. Genauer gesagt ist das obere Minus-Verbindungselement als männliches Steckverbindungselement und das untere Minus-Verbindungselement 25 als Steckverbindungselement weiblichen Typs in Form einer Hülse ausgeformt.

Verbindungselemente 11, 15, 21, 25 sind jeweils elektrisch leitfähig, wobei das obere Plus-Verbindungselement 11 und das untere Plus-Verbindungselement 15 elektrisch mit der Plus-Kontaktfahne 10 (Pluspol) verbunden sind. Das obere Minus-Verbindungselement 21 und das untere Minus-Verbindungselement 25 sind elektrisch mit der Minus-Kontaktfahne 20 (Minuspol) elektrisch verbunden. Somit kann über die Verbindungselemente 11, 15, 21, 25 ein elektrisches Kontaktieren der Pouchzelle 100 erfolgen.

Wie der Fig. 1 ebenfalls entnommen werden kann, erstrecken sich die Verbindungselemente 11, 15, 21, 25 jeweils in senkrechter Richtung VR zur flachen Zelloberfläche 110. Dabei ragen die Verbindungselemente 11, 15, 21, 25, jeweils in senkrechter Richtung VR zu der flachen Zelloberfläche 110, über die flache Zelloberfläche 110 hinaus. Mit anderen Worten stehen das obere Plus-Verbindungselement 11 und das obere Minus-Verbindungselement 21 über die Dicke D der Pouchzelle 100 nach oben über die flache Zelloberfläche 110 hinaus. Das untere Plus-Verbindungselement 15 und das untere Minus-Verbindungselement 25 ragen in entgegengesetzter Richtung über die Dicke D der Pouchzelle 100 hinaus.

Die Kontaktfahnen 10, 20 als jeweilige Träger der Verbindungselemente 11, 15, 21, 25 steht ihrerseits in seitlicher Richtung SR von der Pouchzelle ab.

Im vorliegend dargestellten Ausführungsbeispiel ist die Pouchzelle 100 außerhalb der Verbindungselemente 11, 15, 21, 25 elektrisch isoliert, um Kurzschlüsse zu vermeiden.

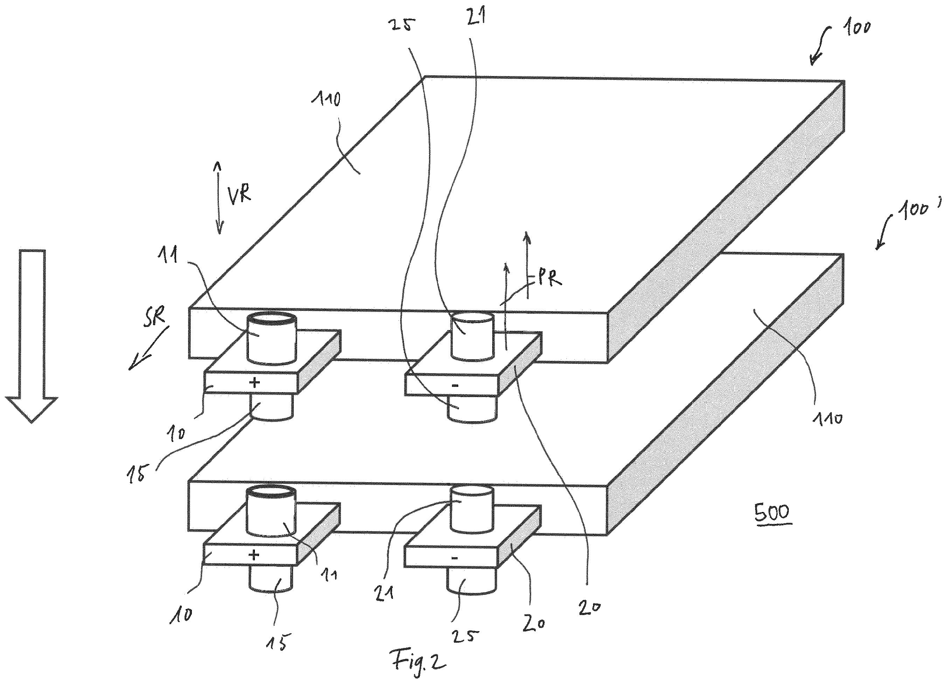

Fig. 2 zeigt nunmehr zwei Pouchzellen 100, 100' gleichen Typs, genauer gesagt zwei Pouchzellen 100 gemäß dem Ausführungsbeispiel der Fig. 1. Die beiden Pouchzellen 100, 100' sind in gleicher Ausrichtung übereinander angeordnet und zunächst noch nicht miteinander verbunden. Ein Verbinden der beiden Pouchzellen 100, 100' kann durch Zusammenführen in der Dickenpfeilrichtung erfolgen. Im Zuge dieses Zusammenführens wird das männliche, untere Plus-Verbindungselement 15 der oberen Pouchzelle 100 in das obere Plus-Verbindungselement 11 der unteren Pouchzelle 100' eingesteckt. Dadurch werden die jeweiligen Plus-Kontaktfahnen 10 der Pouchzellen 100, 100' elektrisch miteinander kontaktiert.

Gleichzeitig wird das untere Minus-Verbindungselement 25 der oberen Pouchzelle 100 (weiblich ausgebildet) auf das obere Minus-Verbindungselement 21 der unteren Pouchzelle 100' aufgestülpt. Derart werden die jeweiligen Minus-Kontaktfahnen 20 der oberen und unteren Pouchzelle 100, 100' kontaktiert.

Durch das in Fig. 2 gezeigte Zusammenführen der Pouchzellen 100, 100' wird ein parallelgeschalteter Stack 500 gebildet. Im in Fig. 2 dargestellten Ausführungsbeispiel weisen die männlichen Verbindungselemente 15, 21 eine Presspassung zu den weiblich ausgebildeten Verbindungselementen 11, 25 auf. Da die Verbindungselemente 11, 15, 21, 25 vorliegend elektrisch leitfähig ausgebildet sind, wird durch Zusammenstecken der Pouchzellen 100, 100' sowohl ein elektrisches Kontaktieren als auch ein mechanisches Verbinden der Pouchzellen 100, 100' erreicht. In senkrechter Richtung VR sind die Pouchzellen 100, 100' somit reibschlüssig miteinander verbunden. In seitlicher Richtung SR liegen die Verbindungselemente 11, 15, 21, 25 formschlüssig zueinander.

In einer hier nicht weiter dargestellten Variante können die Verbindungselemente 11, 15, 21, 25 auch aus einem elektrisch leitfähigen Kunststoff gefertigt sein, wobei die Verbindungselemente 11, 15, 21, 25 in diesem Fall nach dem Zusammenstecken durch Erhitzen oder Verschweißen formschlüssig miteinander verbunden werden können. Ein Verschweißen kann beispielsweise mittels Ultraschallschweißen durchgeführt werden.

Wie der Fig. 2 entnommen werden kann, sind die als Steckverbindungselemente ausgebildeten Verbindungselemente 11, 15, 21, 25 bereits vor dem Stacking der Pouchzellen 100, 100' an diesen angeordnet. Alternativ - dies ist allerdings aufwendiger und hier nicht dargestellt - können die Pouchzellen 100, 100' zunächst gestapelt und danach mit den jeweiligen Verbindungselementen 11, 15, 21, 25 ausgestattet werden.

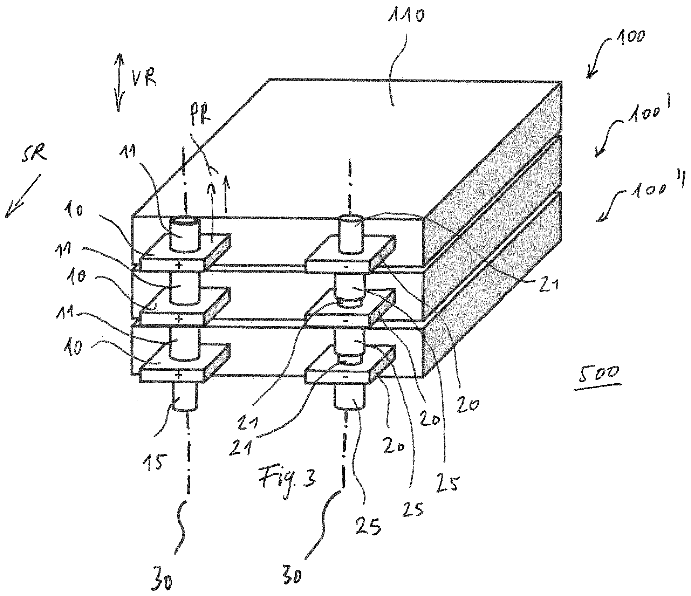

Fig. 3 zeigt schließlich einen parallelgeschalteten Stack 500 mit drei Pouchzellen 100, 100', 100", wobei einerseits die jeweiligen Plus-Kontaktfahnen 10 miteinander kontaktiert sind und andererseits die jeweiligen Minus-Kontaktfahnen 20 elektrisch miteinander kontaktiert und mechanisch miteinander verbunden sind. Wie der Fig. 3 entnommen werden kann, ragen die jeweiligen Plus-Kontaktfahnen 10 und die Minus-Kontaktfahnen 20 von ein und derselben Seite der Pouchzellen 100, 100', 100" in seitlicher Richtung SR ab.

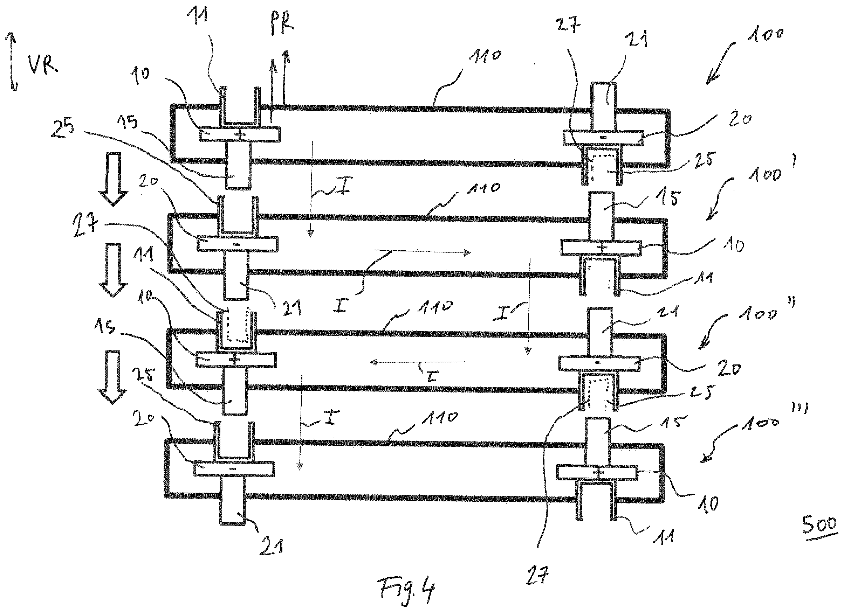

Fig. 4 zeigt insgesamt vier Pouchzellen 100, 100', 100", 100"', die zu einem seriell geschalteten Stack verbunden werden sollen. Dabei handelt es sich bei den Pouchzellen 100 bis 100'" um Pouchzellen des gleichen Typs wie in Fig. 1 dargestellt. Im Unterschied zu dem mit Bezug auf Fig. 2 beschriebenen Stacking werden die Pouchzellen 100 bis 100'" wechselseitig aufeinandergelegt. Mit anderen Worten ist bei der ersten Pouchzelle 100 und der dritten Pouchzelle 100" das obere Plus-Verbindungselement 11 obenliegend. Bei der zweiten Pouchzelle 100' und der vierten Pouchzelle 100'" sind die oberen Plus-Verbindungselemente 11 jeweils unten rechts (Lage in Fig. 4) angeordnet. Mit anderen Worten sind jeweils benachbarte Pouchzellen um 180° zueinander gedreht.

Um einen elektrischen Kurzschluss zwischen zwei benachbarten Pouchzellen zu vermeiden, weisen beispielsweise das untere Minus-Verbindungselement 25 (weiblich) der ersten Pouchzelle 100, das obere Plus-Verbindungselement 11 und das untere Minus-Verbindungselement 25 (jeweils weiblich) der dritten Pouchzelle 100" eine Isolierung 27 in Form einer koaxial in dem jeweiligen Verbindungselement 25, 11 angeordneten Hülse bereitgestellt.

Der Stromfluss I durch den dann seriell geschalteten Stack 500 ist durch die entsprechenden Pfeile dargestellt.

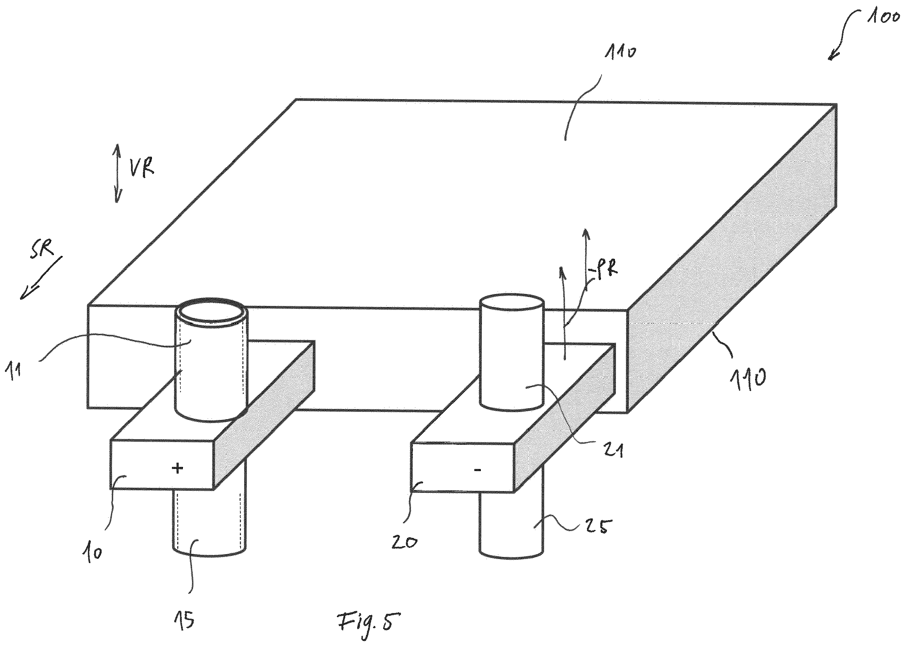

Fig. 5 zeigt schließlich eine Pouchzelle 100 alternativen Typs. Im Gegensatz zu dem mit Fig. 1 beschriebenen Ausführungsbeispiel sind beide Plus-Verbindungselemente 11, 15, die jeweils elektrisch mit der Plus-Kontaktfahne 10 verbunden sind, unterschiedlichen Typs. Im vorliegend gezeigten Ausführungsbeispiel sind beide Plus-Verbindungselemente 11, 15 weiblichen Typs.

Wie ebenfalls der Fig. 5 entnommen werden kann, sind die elektrisch mit der Minus-Kontaktfahne 20 verbundenen Minus-Verbindungselemente 21, 25 gleichen Typs, genauer gesagt beispielhaft männlichen Typs. Die Plus-Verbindungselemente 11, 15 sind komplementär zu den Minus-Verbindungselementen 21, 25 ausgebildet.

Wie auch beim Ausführungsbeispiel der Fig. 1 erstrecken sich die Verbindungselemente 11, 15, 21, 25 jeweils in senkrechter Richtung VR zu den flachen Zelloberflächen 110 auf der Ober- bzw. Unterseite der Pouchzelle 100. Dabei ragen die Verbindungselemente 11, 15, 21, 25 in senkrechter Richtung VR über die jeweils flachen Zelloberflächen 110 hinaus. Auch die Pouchzelle 100 der Fig. 5 ist lediglich auf einer Seite, hier beispielhaft auf der Stirnseite elektrisch kontaktiert.

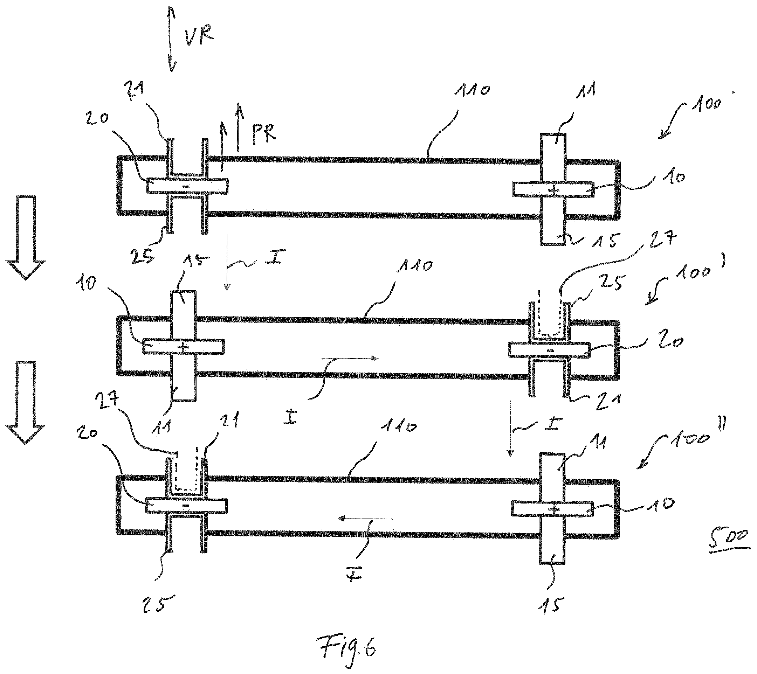

Fig. 6 zeigt die Anordnungen dreier Pouchzellen 100, 100', 100" vor ihrer elektrischen Kontaktierung. Die drei Pouchzellen 100, 100', 100" weisen jeweils Plus-Verbindungselemente 11, 15 gleichen Typs sowie Minus-Verbindungselemente 21, 25 gleichen Typs auf. Wobei die Plus-Verbindungselemente 11, 15 komplementär zu den Minus-Verbindungselementen 21, 25 ausgeformt sind. Im Gegensatz zu der mit Bezug auf Fig. 5 beschriebenen Pouchzelle 100 sind die Polaritäten der Pouchzellen 100, 100', 100" der Fig. 6 vertauscht. Das heißt, in Fig. 6 ist die Minus-Kontaktfahne 20 jeweils Trägerin der weiblich ausgebildeten Minus-Verbindungselemente 21, 25.

Um ein elektrisches Kurzschließen beim Stacking zu vermeiden, muss das untere Minus-Verbindungselement 25 der zweiten Pouchzelle 100' und das obere Minus-Verbindungselement 21 der dritten Pouchzelle 100" jeweils eine Isolierung 27 auf, die als koaxial zum jeweiligen Verbindungselement angeordnete Hülse ausgebildet ist. Im verbundenen Zustand (Zusammendrücken in dicker Pfeilrichtung) wird aus den einzelnen Pouchzellen 100, 100', 100" der Fig. 6 ein reihengeschalteter Stack 500 gebildet.

Der Stack 500 der Fig. 3 ist beispielhaft durch zwei Schraubverbindungen 30 auch in senkrechter Richtung VR formschlüssig gesichert. Dabei verlaufen die Schraubverbindungen 30 jeweils koaxial durch die Plus-Verbindungselemente 11, 15 bzw. durch die Minus-Verbindungselemente 21, 25 hindurch. In diesem Fall ist auf eine elektrische Isolierung dieser Durchführung zu achten. Dies kann beispielsweise durch eine zusätzlich vorgesehene Isolierhülse, die durch die jeweiligen Verbindungselemente 11, 15, 21, 25 verläuft, erreicht werden. Alternativ oder zusätzlich kann eine Verschraubung mittels einer elektrisch isolierenden Kunststoffschraube erfolgen. Beispielhaft sind in Fig. 3 zwei Schraubverbindungen 30 dargestellt. Es ist ebenfalls eine Schraubverbindung lediglich durch die Plus-Verbindungselemente 11, 15 oder die Minus-Verbindungselemente 21, 25 denkbar.

### Bezugszeichenliste

- 10: Plus-Kontaktfahne
- 11: oberes Plus-Verbindungselement
- 15: unteres Plus-Verbindungselement
- 20: Minus-Kontaktfahne
- 21: oberes Minus-Verbindungselement
- 25: unteres Minus-Verbindungselement
- 27: Isolierung
- 30: Schraubverbindung

- 100..100"": Pouchzelle
- 110: flache Zelloberfläche
- 500: Stack

- D: Dicke
- I: Stromfluss
- PR: parallele Richtung
- SR: seitliche Richtung
- VR: senkrechte Richtung

## Patentansprüche

1. Pouchzelle (100) mit einer Plus-Kontaktfahne (10) und einer Minus-Kontaktfahne (20), über die die Pouchzelle (100) elektrisch kontaktiert und so beladen und entladen werden kann, wobei die Pouchzelle (100) flächig ausgebildet ist und eine flache Zelloberfläche (110) aufweist, die sich parallel (PR) zur der Plus-Kontaktfahne (10) und der Minus-Kontaktfahne (20) erstreckt,
**dadurch gekennzeichnet, dass** die Plus-Kontaktfahne (10) ein oberes Plus-Verbindungselement (11) und ein unteres Plus-Verbindungselement (15) aufweist, die auf einander gegenüberliegenden Seiten der Plus-Kontaktfahne (10) angeordnet sind, und die Minus-Kontaktfahne (20) ein oberes Minus-Verbindungselement (21) und ein unteres Minus-Verbindungselement (25) aufweist, die auf einander gegenüberliegenden Seiten der Minus-Kontaktfahne (10) angeordnet sind.

2. Pouchzelle (100) nach Anspruch 1,
**dadurch gekennzeichnet, dass** die Verbindungselemente (11, 15, 21, 25) als Steckverbindungselemente oder Schraubverbindungselemente ausgebildet sind.

3. Pouchzelle (100) nach Anspruch 2,
**dadurch gekennzeichnet, dass** beide Plus-Verbindungselemente (11, 15) gleichen Typs, vorzugsweise weiblichen Typs sind und/oder beide Minus-Verbindungselemente (21, 25) gleichen, vorzugsweise männlichen Typs sind.

4. Pouchzelle (100) nach Anspruch 2,
**dadurch gekennzeichnet, dass** die beiden Plus-Verbindungselemente (11, 15) zueinander komplementären Typs sind und/oder die beiden Minus-Verbindungselemente (21, 25) zueinander komplementären Typs sind.

5. Pouchzelle (100) nach einem der vorangehenden Ansprüche,
**dadurch gekennzeichnet, dass** die Verbindungselemente (11, 15, 21, 25) zumindest abschnittweise elektrisch leitfähig sind.

6. Pouchzelle (100) nach einem der vorangehenden Ansprüche,
**dadurch gekennzeichnet, dass** sich die Verbindungselemente (11, 15, 21, 25) jeweils senkrecht (VR) zur flachen Zelloberfläche (110) erstrecken.

7. Pouchzelle (100) nach einem der vorangehenden Ansprüche,
**dadurch gekennzeichnet, dass** die Verbindungselemente (11, 15, 21, 25), senkrecht (VR) zu der flachen Zelloberfläche (110), über die flache Zelloberfläche (110) hinausragen.

8. Pouchzelle (100) nach einem der vorangehenden Ansprüche,
**dadurch gekennzeichnet, dass** die Kontaktfahnen (10, 20) in seitlicher Richtung (SR) von der Pochzelle abstehen.

9. Pouchzelle (100) nach einem der vorangehenden Ansprüche,
**dadurch gekennzeichnet, dass** ein oder mehrere Verbindungselemente (11, 15, 21, 25) eine innere, vorzugsweise koaxial angeordnete Isolierung (27) oder Passivierung aufweisen.

10. Pouchzelle (100) nach einem der vorangehenden Ansprüche,
**dadurch gekennzeichnet, dass** die Pochzelle (100) außerhalb der Verbindungselemente (11, 15, 21, 25) elektrisch isoliert, vorzugsweise vollständig elektrisch isoliert ist.

11. Stack (500) aufweisend eine Mehrzahl von Pouchzellen (100) nach einem der vorangehenden Ansprüche, wobei die Pouchzellen (100) über ihre jeweiligen Verbindungselemente (11, 15, 21, 25) elektrisch miteinander kontaktiert sind.

12. Verwendung eines Stacks (500) nach Anspruch 11 zur Versorgung einer elektrischen Handwerkzeugmaschine.
